# EUROPEAN PATENT APPLICATION

(11) **EP 4 411 947 A1**
(43) Date of publication of application: **07.08.2024**
(21) Application number: 23217088.6
(22) Date of filing: 15.12.2023
(51) Int. Cl.: H01M 50/209, H01M 50/291, H01M 50/293, H01M 10/647, H01M 10/653, H01M 10/6555, H01M 10/658

(54) **BATTERY PACK**

(30) Priority: 31.01.2023 JP 2023012959
(71) Applicant: Prime Planet Energy & Solutions, Inc., Chuo-ku Tokyo 103-0022 (JP)
(72) Inventor: IWATA, Ryosuke, Tokyo, 103-0022 (JP); MATSUTA, Shigeki, Tokyo, 103-0022 (JP); OMURA, Tetsuji, Tokyo, 103-0022 (JP)
(74) Representative: Kuhnen & Wacker Patent- und Rechtsanwaltsbüro PartG mbB

(57) **Abstract**

A battery pack (500) disclosed herein includes a plurality of rectangular secondary batteries (100) that are disposed along an arrangement direction (X), and a spacer (200) that is disposed between the rectangular secondary batteries (100) that are adjacent in the arrangement direction (X). The spacer (200) includes an elastic part (210) including a plurality of hollow parts (212) extending along the arrangement direction (X) and configured to be elastically deformable in the arrangement direction (X), and a heat insulation part (220) disposed between the elastic part (210) and the rectangular secondary battery (100) in the arrangement direction (X) and having lower heat conductivity than the elastic part (210).

## Description

### BACKGROUND OF THE DISCLOSURE

### 1. Field

The present disclosure relates to a battery pack.

### 2. Background

In power sources for vehicle driving or the like, battery packs in which a plurality of secondary batteries (cells) are electrically connected to each other for higher output have widely been used conventionally. Conventional technical literatures related to the battery pack include Japanese Patent No. 6192467 and Japanese Patent Application Publication No. 2017-107648.

For example, Japanese Patent No. 6192467 discloses a battery pack including a plurality of secondary batteries that are disposed along a predetermined arrangement direction, and a spacer (separator) disposed between the secondary batteries that are adjacent in the arrangement direction and having penetration holes, which extend along a direction orthogonal to the arrangement direction, disposed in a diffused manner substantially uniformly in the entire cross section. In Japanese Patent No. 6192467, the penetration hole extending along the direction orthogonal to the arrangement direction forms a flow channel of a cooling medium such as cooling air or cooling water and promotes heat dissipation of the secondary battery, and by disposing the penetration holes in the spacer in the diffused manner, the spacer has elasticity.

### SUMMARY

According to the present inventors' examination, a spacer configured to be elastically deformable may deteriorate in elastic function due to long use. That is to say, in recent years, a secondary battery mounted on a vehicle or the like has come to have higher capacity. The secondary battery with the higher capacity easily generates heat due to charging and discharging (in particular, charging and discharging at a high rate) or the like. The heat generated in the secondary battery conducts to the spacer in contact with the secondary battery. In particular, this tendency is remarkable when a part in contact with the secondary battery is a material with high heat conductivity, such as metal. Thus, the spacer deteriorates thermally and the elastic function decreases easily. As a result, a load necessary to maintain the performance may not be applied to the secondary battery.

The present disclosure has been made in view of the above circumstances, and its main object is to provide a battery pack including a spacer whose elastic function does not easily decrease and which can apply a load stably to a secondary battery.

A battery pack according to the present disclosure includes a plurality of rectangular secondary batteries that are disposed along a predetermined arrangement direction, and a spacer that is disposed between the rectangular secondary batteries that are adjacent in the arrangement direction. The spacer includes an elastic part including a plurality of hollow parts extending along the arrangement direction and configured to be elastically deformable in the arrangement direction, and a heat insulation part disposed between the elastic part and the rectangular secondary battery in the arrangement direction and having lower heat conductivity than the elastic part.

In the present disclosure, the spacer includes the elastic part including the plurality of hollow parts extending along the arrangement direction and is configured to be elastically deformable in the arrangement direction; thus, even when the secondary battery expands and shrinks at charging and discharging, a load can be stably applied to the secondary battery. Moreover, since the plurality of hollow parts extend along the arrangement direction in the elastic part, for example, the structure can be maintained stably relatively compared to a case in which the hollow parts extend perpendicular to the arrangement direction as described in Japanese Patent No. 6192467. Additionally, in the present disclosure, the spacer includes the heat insulation part in addition to the elastic part including the plurality of hollow parts. Therefore, for example, compared to a case in which the spacer includes neither the hollow part nor the heat insulation part as described above, the heat insulation effect of the hollow part or the heat insulation part makes it difficult for the elastic part to be influenced by the heat generation of the secondary battery relatively and the thermal deterioration occurs less easily. With the aforementioned effects in combination, the decrease in elastic function of the elastic part can be suppressed and moreover, the load can be stably applied to the secondary battery in the present disclosure.

The above and other elements, features, steps, characteristics and advantages of the present disclosure will become more apparent from the following detailed description of the preferred embodiments with reference to the attached drawings.

### BRIEF DESCRIPTION OF THE DRAWINGS

FIG. 1 is a perspective view schematically illustrating a battery pack according to an embodiment;
FIG. 2 is a perspective view schematically illustrating a rectangular secondary battery in FIG. 1;
FIG. 3 is a schematic longitudinal cross-sectional view taken along line III-III in FIG. 2;
FIG. 4 is a perspective view schematically illustrating a spacer in FIG. 1;
FIG. 5 expresses a schematic FS curve;
FIG. 6 is a schematic plan view of an elastic part;
FIG. 7 is a diagram corresponding to FIG. 6, illustrating an elastic part according to a first modification;
FIG. 8 is a diagram corresponding to FIG. 6, illustrating an elastic part according to a second modification;
FIGS. 9A to 9C are schematic views of an elastic part according to a third modification, in which FIG. 9A is a plan view of a rear surface, FIG. 9B is a plan view of a front surface, and FIG. 9C is a longitudinal cross-sectional view taken along line IXC-IXC in FIG. 9A; and
FIG. 10 is a diagram corresponding to FIG. 9C, illustrating an elastic part according to a fourth modification.

### DETAILED DESCRIPTION OF THE PREFERRED EMBODIMENTS

Preferred embodiments of a battery pack disclosed herein will be described below with reference to the drawings as appropriate. Matters other than matters particularly mentioned in the present specification and necessary for the implementation of the present disclosure (for example, the general configuration and manufacturing process of a battery pack or a rectangular secondary battery that do not characterize the present disclosure) can be grasped as design matters of those skilled in the art based on the prior art in the relevant field. The battery pack disclosed herein can be implemented on the basis of the disclosure of the present specification and common technical knowledge in the relevant field.

Note that in the drawings below, the members and parts with the same operation are denoted by the same reference sign and the overlapping description may be omitted or simplified. Moreover, in the present specification, the notation "A to B" for a range signifies a value more than or equal to A and less than or equal to B, and is meant to encompass also the meaning of being "preferably more than A" and "preferably less than B".

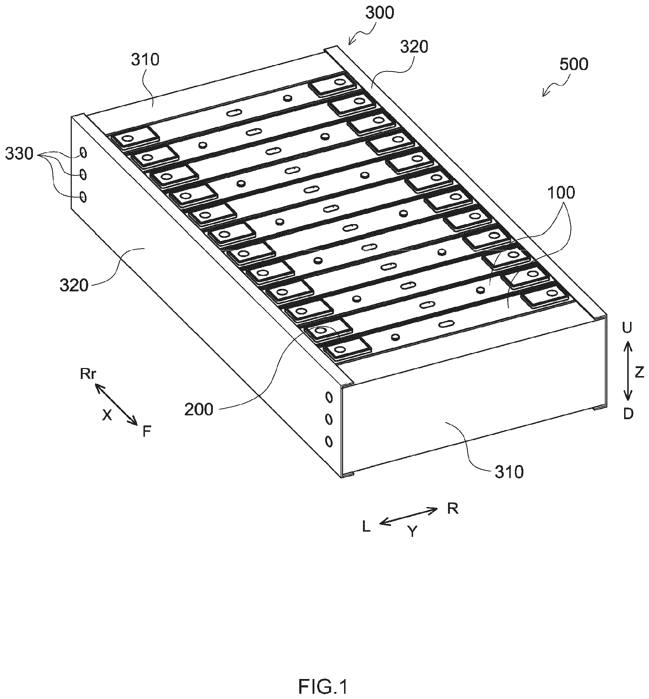

FIG. 1 is a perspective view schematically illustrating a battery pack 500 according to an embodiment. The battery pack 500 includes a plurality of rectangular secondary batteries 100 that are disposed along an arrangement direction X and a plurality of spacers 200 that are disposed between the rectangular secondary batteries 100 that are adjacent in the arrangement direction X. In this case, the battery pack 500 further includes a restriction mechanism 300. In the following description, reference signs L, R, F, Rr, U, and D in the drawings respectively denote left, right, front, rear, up, and down, and reference signs X, Y, and Z in the drawings respectively denote a thickness direction of the rectangular secondary battery 100, a long side direction that is orthogonal to the thickness direction, and an up-down direction that is orthogonal to the thickness direction and the long side direction. The thickness direction X also corresponds to the arrangement direction of the rectangular secondary batteries 100. These directions are defined however for convenience of explanation, and do not limit the manner in which the battery pack 500 is disposed.

The restriction mechanism 300 is configured to apply prescribed restriction pressure on the plurality of rectangular secondary batteries 100 and the plurality of spacers 200 from the arrangement direction X. The restriction mechanism 300 here includes a pair of end plates 310, a pair of side plates 320, and a plurality of screws 330. The pair of end plates 310 are disposed at both ends of the plurality of rectangular secondary batteries 100 in the arrangement direction X. The pair of end plates 310 hold the plurality of rectangular secondary batteries 100 and the plurality of spacers 200 therebetween in the arrangement direction X. The pair of end plates 310 are preferably made of metal. However, a part thereof may be made of resin.

The pair of side plates 320 bridge over the pair of end plates 310. The pair of side plates 320 are preferably made of metal. However, a part thereof may be made of resin. The pair of side plates 320 are fixed to the end plates 310 by the plurality of screws 330 so that a restriction load is generally about 10 to 15 kN, for example. Thus, the restriction load is applied on the plurality of rectangular secondary batteries 100 and the plurality of spacers 200 from the arrangement direction X and accordingly, the battery pack 500 is held integrally. The structure of the restriction mechanism is, however, not limited to this example. In another example, the restriction mechanism 300 may alternatively include a plurality of restriction bands, bind bars, or the like instead of the side plates 320.

The plurality of rectangular secondary batteries 100 are arranged along the arrangement direction X (in other words, the thickness direction X of the rectangular secondary battery 100) between the pair of end plates 310. The plurality of rectangular secondary batteries 100 are preferably restricted by the restriction mechanism 300. Although not illustrated in FIG. 1, when the battery pack 500 is used, the plurality of rectangular secondary batteries 100 are electrically connected to each other by a conductive member such as a busbar. The connection method is not limited in particular and may be, for example, series connection, parallel connection, multiple series-multiple parallel connection, or the like.

The rectangular secondary battery 100 is a battery that is capable of being charged and discharged repeatedly. Note that in the present specification, the term "secondary battery" refers to general power storage devices that are capable of being charged and discharged repeatedly, and corresponds to a concept encompassing, in addition to so-called storage batteries such as lithium ion secondary batteries and nickel-hydrogen batteries, capacitors such as lithium ion capacitors and electrical double-layer capacitors. The shape, the size, the number, the arrangement, and the like of the rectangular secondary batteries 100 included in the battery pack 500 are not limited to the aspect disclosed herein, and can be changed as appropriate.

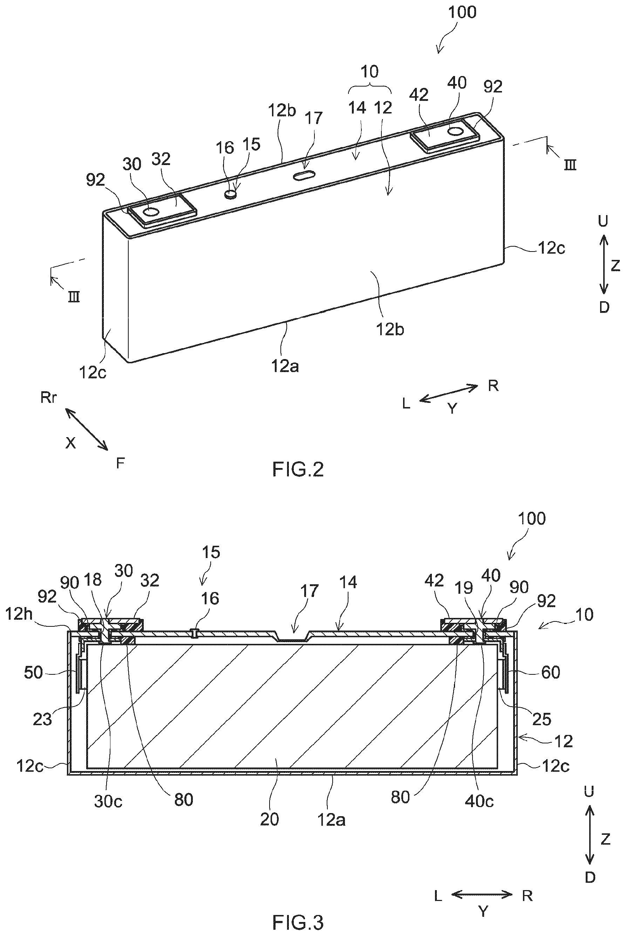

FIG. 2 is a perspective view of the rectangular secondary battery 100. FIG. 3 is a schematic longitudinal cross-sectional view taken along line III-III in FIG. 2. As illustrated in FIG. 3, the rectangular secondary battery 100 includes a battery case 10, an electrode body 20, a positive electrode terminal 30, a negative electrode terminal 40, a positive electrode current collecting member 50, a negative electrode current collecting member 60, and a nonaqueous electrolyte solution (not shown). The nonaqueous electrolyte solution may be similar to the conventional nonaqueous electrolyte solution, without particular limitations. The rectangular secondary battery 100 is a lithium ion secondary battery here.

The battery case 10 is a housing that accommodates the electrode body 20 and the nonaqueous electrolyte solution. As illustrated in FIG. 2, the external shape of the battery case 10 is a flat and bottomed cuboid shape (rectangular shape). A conventionally used material can be used for the battery case 10, without particular limitations. The battery case 10 is preferably made of metal, and for example, more preferably made of aluminum, an aluminum alloy, iron, an iron alloy, or the like. The battery case 10 includes an exterior body 12 and a sealing plate (lid body) 14. The battery case 10 preferably includes the exterior body 12 and the sealing plate 14 as described in the present embodiment.

As illustrated in FIG. 2, the exterior body 12 includes a bottom wall 12a with a substantially rectangular shape, a pair of long side walls 12b extending from long sides of the bottom wall 12a and facing each other, a pair of short side walls 12c extending from short sides of the bottom wall 12a and facing each other, and an opening 12h (see FIG. 3) facing the bottom wall 12a. The long side wall 12b is a surface that faces the spacer 200. The long side wall 12b is larger in area than the short side wall 12c. The sealing plate 14 is a plate-shaped member that seals the opening 12h of the exterior body 12. As illustrated in FIG. 3, the sealing plate 14 is attached to the exterior body 12 so as to cover the opening 12h. The sealing plate 14 faces the bottom wall 12a of the exterior body 12. The sealing plate 14 is substantially rectangular in shape. The battery case 10 is unified in a manner that the sealing plate 14 is joined (preferably, joined by welding) to a periphery of the opening 12h of the exterior body 12. The battery case 10 is hermetically sealed (closed).

Note that in the present specification, the term "substantially rectangular shape" encompasses, in addition to a perfect rectangular shape (rectangle), for example, a shape whose corner connecting a long side and a short side of the rectangular shape is rounded, a shape whose corner includes a notch, and the like.

As illustrated in FIG. 3, a liquid injection hole 15, a discharge valve 17, and two terminal extraction holes 18 and 19 are provided in the sealing plate 14. The sealing plate 14 is preferably provided with the liquid injection hole 15 and the discharge valve 17. The liquid injection hole 15 is provided for the purpose of injecting the nonaqueous electrolyte solution after the sealing plate 14 is assembled to the exterior body 12. The liquid injection hole 15 is sealed by a sealing member 16. The discharge valve 17 is configured to break when the pressure in the battery case 10 becomes more than or equal to a predetermined value so as to discharge the gas out of the battery case 10. The terminal extraction holes 18 and 19 penetrate the sealing plate 14 in the up-down direction Z. The terminal extraction holes 18 and 19 each have the inner diameter that enables the positive electrode terminal 30 and the negative electrode terminal 40, which have not been attached to the sealing plate 14 yet (before a caulking process), to pass therethrough.

The positive electrode terminal 30 is disposed at an end part of the sealing plate 14 on one side in the long side direction Y (left end part in FIG. 2 and FIG. 3). The negative electrode terminal 40 is disposed at an end part of the sealing plate 14 on the other side in the long side direction Y (right end part in FIG. 2 and FIG. 3). The positive electrode terminal 30 and the negative electrode terminal 40 are preferably attached to the sealing plate 14. As illustrated in FIG. 3, the positive electrode terminal 30 and the negative electrode terminal 40 extend from the inside to the outside of the sealing plate 14 through the terminal extraction holes 18 and 19. The positive electrode terminal 30 and the negative electrode terminal 40 are here caulked to a peripheral part of the sealing plate 14 that surrounds the terminal extraction holes 18 and 19 by the caulking process. Caulking parts 30c and 40c are formed at an end part of the positive electrode terminal 30 and the negative electrode terminal 40 on the exterior body 12 side (lower end part in FIG. 3).

As illustrated in FIG. 3, the positive electrode terminal 30 is electrically connected to a positive electrode current collecting part 23 of the electrode body 20 through the positive electrode current collecting member 50 inside the exterior body 12. The negative electrode terminal 40 is electrically connected to a negative electrode current collecting part 25 of the electrode body 20 through the negative electrode current collecting member 60 inside the exterior body 12. The positive electrode terminal 30 is insulated from the sealing plate 14 by an internal insulation member 80 and a gasket 90. The negative electrode terminal 40 is insulated from the sealing plate 14 by the internal insulation member 80 and the gasket 90.

As illustrated in FIG. 2 and FIG. 3, a positive electrode external conductive member 32 and a negative electrode external conductive member 42, each having a plate shape, are attached to an external surface of the sealing plate 14. The positive electrode external conductive member 32 is electrically connected to the positive electrode terminal 30. The negative electrode external conductive member 42 is electrically connected to the negative electrode terminal 40. The positive electrode external conductive member 32 and the negative electrode external conductive member 42 are members to which the conductive member such as a busbar that electrically connects the plurality of rectangular secondary batteries 100 to each other is attached. The positive electrode external conductive member 32 and the negative electrode external conductive member 42 are insulated from the sealing plate 14 by an external insulation member 92. For example, in the adjacent rectangular secondary batteries 100, the positive electrode external conductive member 32 of one rectangular secondary battery 100 and the negative electrode external conductive member 42 of the other rectangular secondary battery 100 are electrically connected to each other by the busbar or the like so as to be connected in series in the battery pack 500.

The electrode body 20 includes a positive electrode and a negative electrode. The structure of the electrode body 20 may be similar to the conventional structure thereof, without particular limitations. The number of electrode bodies 20 to be disposed in one exterior body 12 is not limited in particular and may be plural. The electrode body 20 here is a wound electrode body with a flat shape in which the positive electrode with a band shape and the negative electrode with a band shape are stacked in an insulated state and wound using a winding axis as a center. In another embodiment, the electrode body 20 may be a stack type electrode body formed in a manner that a plurality of square positive electrodes and a plurality of square negative electrodes are stacked in the insulated state.

As illustrated in FIG. 3, the positive electrode current collecting part 23 is provided at one end part of the electrode body 20 in a winding axis direction (the long side direction Y in FIG. 3). The negative electrode current collecting part 25 is provided at the other end part. The positive electrode current collecting member 50 is attached to the positive electrode current collecting part 23. The negative electrode current collecting member 60 is attached to the negative electrode current collecting part 25. The positive electrode current collecting member 50 constitutes a conductive path that electrically connects the positive electrode terminal 30 and the positive electrode of the electrode body 20. The negative electrode current collecting member 60 constitutes a conductive path that electrically connects the negative electrode terminal 40 and the negative electrode of the electrode body 20.

The spacers 200 are each disposed between the plurality of rectangular secondary batteries 100 in the arrangement direction X here. That is to say, in the arrangement direction X, the rectangular secondary batteries 100 and the spacers 200 are arranged alternately. Note that it is only necessary that the spacer 200 is disposed between at least two rectangular secondary batteries 100 that are adjacent in the arrangement direction X, and it is not always necessary that the spacer 200 is disposed between all the rectangular secondary batteries 100. Here, each of a pair of surfaces of the spacer 200 that are orthogonal to the arrangement direction X (both surfaces in the arrangement direction X) is in contact (direct contact) with the long side wall 12b of the rectangular secondary battery 100. Between the rectangular secondary battery 100 and the spacer 200, however, a different member can exist.

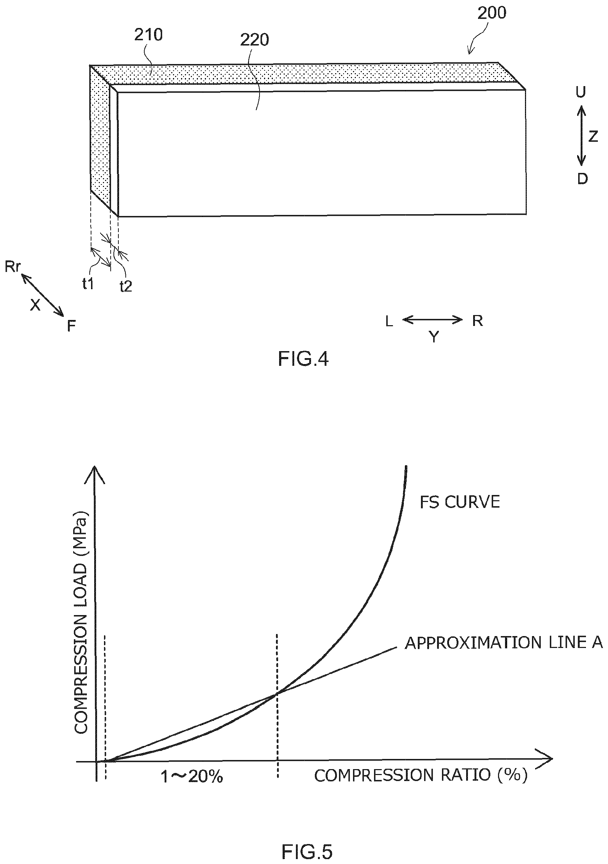

FIG. 4 is a perspective view schematically illustrating the spacer 200. As illustrated in FIG. 4, the spacer 200 includes an elastic part 210 and a heat insulation part 220. The outer shape of each of the elastic part 210 and the heat insulation part 220 in FIG. 4 is a flat plate shape. The elastic part 210 and the heat insulation part 220 are stacked in the arrangement direction X. The spacer 200 has a two-layer structure including one elastic part 210 and one heat insulation part 220 here. In this case, the elastic part 210 includes a pair of surfaces (Y-Z planes in FIG. 4) orthogonal to the thickness direction X, one of which faces (here, is in contact with) the heat insulation part 220 and the other of which faces (here, is in contact with) the long side wall 12b of the battery case 10. Here, the heat insulation part 220 includes a pair of surfaces (Y-Z planes in FIG. 4) orthogonal to the thickness direction X, one of which faces (here, is in contact with) the elastic part 210 and the other of which faces (here, is in contact with) the long side wall 12b of the battery case 10.

The elastic part 210 and the heat insulation part 220 are preferably integrated, and particularly preferably integrated with a binding member. Thus, a deviation in stacking between the elastic part 210 and the heat insulation part 220 can be prevented. Additionally, the productivity and workability of the battery pack 500 can be improved. In the present specification, the term "integrating" encompasses detachable fixing using a binding member, undetachable attachment, engagement without the use of a binding member (mechanical joining), integral molding, and the like. The elastic part 210 and the heat insulation part 220 may be, for example, fixed with a tape or the like as the binding member, covered entirely and wrapped with a resin sheet, a laminate film, or the like as the binding member, attached to each other chemically or physically through an adhesive or an adhesive layer (double-sided tape or the like) as the binding member, or processed as one member by engagement or integral molding without the use of the binding member.

As illustrated in FIG. 4, the elastic part 210 and the heat insulation part 220 have approximately the same area of the Y-Z plane (machining error is allowed). In the elastic part 210 and the heat insulation part 220, the area of the Y-Z plane is preferably 50% or more, more preferably 70% or more, and particularly preferably 80% or more of the area of the long side wall 12b of the battery case 10 (surface facing the spacer 200). Thus, the effect of the art disclosed herein can be achieved at a high level.

As illustrated in FIG. 4, a thickness t1 of the elastic part 210 is preferably 5% or more, for example 5 to 15% of the thickness of the rectangular secondary battery 100 (length in thickness direction X) in a state before the spacer 200 is assembled to the battery pack 500 and compressed. A thickness t2 of the heat insulation part 220 is preferably 2% or more, for example 2 to 20%, and more preferably 5% or more, for example 5 to 15% of the thickness of the rectangular secondary battery 100 (length in thickness direction X) in the state before the spacer 200 is assembled to the battery pack 500 and compressed. The total of the thickness t1 and the thickness t2 is preferably 7% or more, for example 7 to 35%, and more preferably 10% or more, for example 10 to 30% of the thickness of the rectangular secondary battery 100 (length in thickness direction X). Thus, the effect of the art disclosed herein can be achieved at the high level.

However, the shape, the size, the arrangement, and the like of the elastic part 210 and the heat insulation part 220 can be determined as appropriate in accordance with the shape, the size, the capacity (degree of expansion and shrinkage) of the rectangular secondary battery 100, for example. In another example, the spacer 200 may have a structure with three or more layers. For example, the spacer 200 may have a three-layer structure (heat insulation part 220/elastic part 210/heat insulation part 220) where the heat insulation part 220 is disposed on both side surfaces of the elastic part 210 in the arrangement direction X, or on the contrary, a three-layer structure (elastic part 210/heat insulation part 220/elastic part 210) where the elastic part 210 is disposed on both side surfaces of the heat insulation part 220 in the arrangement direction X. Alternatively, the spacer 200 may have a structure with four or more layers or may include a part other than the elastic part 210 and the heat insulation part 220.

The elastic part 210 is configured to be elastically deformable in the arrangement direction X. Therefore, when the rectangular secondary battery 100 expands at the charging or the like and the load applied to the elastic part 210 increases, the elastic part 210 is compressed. On the other hand, when the rectangular secondary battery 100 shrinks at the discharging or the like and the load applied to the elastic part 210 decreases, the elastic part 210 is restored to the original shape. Therefore, even when the rectangular secondary battery 100 expands and shrinks at the charging and discharging, the rectangular secondary battery 100 can be stably pressed with a predetermined restriction load and the load necessary to maintain the performance can be stably applied by the provision of the elastic part 210 in the spacer 200. Moreover, repeating the charging and discharging may cause the rectangular secondary battery 100 to swell; however, in such a case, the swelling can be absorbed, so that the application of an excessive restriction load that is more than or equal to a predetermined level to the rectangular secondary battery 100 or the increase in interelectrode distance between the positive and negative electrodes, which results in the deterioration in performance, can be suppressed.

The elastic part 210 has an elastic modulus of preferably 10 MPa or less, more preferably 5 MPa or less, and much more preferably 3.5 MPa or less. When the elastic modulus of the elastic part 210 is a predetermined value or less, the spacer 200 is crushed easily in the case where the rectangular secondary battery 100 is charged or the rectangular secondary battery 100 swells. The elastic part 210 has an elastic modulus of preferably 1 MPa or more, more preferably 1.5 MPa or more, and much more preferably 3.0 MPa or more. When the elastic modulus of the elastic part 210 is a predetermined value or more, the spacer 200 is restored to the original shape easily at the discharging of the rectangular secondary battery 100. When the rectangular secondary battery 100 swells, the spacer 200 resists to suppress the swelling easily. Thus, the effect of the art disclosed herein can be achieved at the high level. The elastic modulus of the elastic part 210 can be adjusted by the material, the structure, and the like to be described below, for example.

In the present specification, the term "elastic modulus" refers to the value obtained as follows. That is, first, a test piece in which each of a pair of surfaces orthogonal to the thickness direction X has a square shape of 5 cm × 5 cm is prepared and the initial thickness (mm) is measured with a micrometer. Next, using a conventionally known compression testing device, the test piece is compressed with a constant speed in the thickness direction X until the compression load on the test piece per unit area becomes 3.9 MPa under a condition of a compression speed of 30 N/min (12 kPa/min); thus, the compression load (MPa) and the thickness after the compression (mm) are measured. Next, from the compression load (MPa) and the thickness after the compression (mm), a compression load-compression ratio curve (FS curve) is formed, in which the horizontal axis represents a compression ratio (%) obtained by (initial thickness - thickness after compression) (mm)/initial thickness (mm) × 100 and the vertical axis represents the compression load (N/mm² = MPa). FIG. 5 expresses the schematic FS curve. As expressed in FIG. 5, the inclination of an approximation line A in the range of the compression ratio of 1 to 20% in the FS curve (horizontal axis: compression ratio, vertical axis: compression load) is the elastic modulus (MPa). As the numeral of the elastic modulus is smaller, the hardness is lower and the elastic deformation in the thickness direction X occurs more easily.

When the thickness of the elastic part 210 that is placed at rest for two hours after the aforementioned compression test is measured with the micrometer, the thickness of the elastic part 210 after being placed at rest for two hours is more preferably within -20% of the initial thickness. Thus, in the case where the rectangular secondary battery 100 repeats the shrinkage and expansion with a charging and discharging cycle, the elastic part 210 is restored to the original shape easily. Thus, the effect of the art disclosed herein can be achieved at the high level.

In consideration of the range of the elastic modulus, the elastic part 210 is preferably formed of a polymer material. Examples of the polymer material include rubbers (thermosetting elastomers) such as silicone rubber, fluorine rubber, urethane rubber, natural rubber, styrene butadiene rubber, butyl rubber, ethylene propylene rubber (EPM, EPDM), butadiene rubber, isoprene rubber, and norbornene rubber. Among these, EPDM and silicone rubber are preferable. The elastic part 210 is preferably made of rubber.

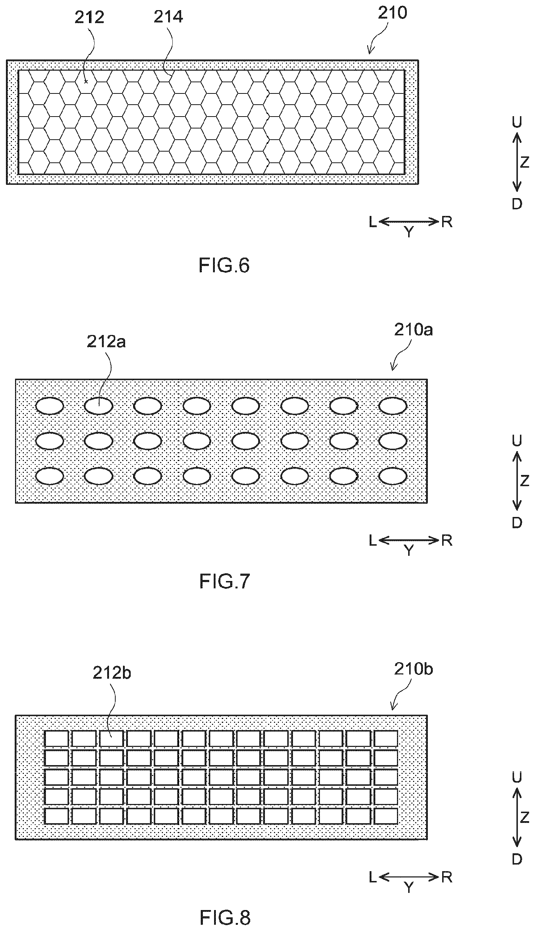

FIG. 6 is a plan view of a surface (Y-Z plane) of the elastic part 210 that is orthogonal to the thickness direction X (arrangement direction X). As illustrated in FIG. 6, in this embodiment, the elastic part 210 has a hole structure. The elastic part 210 includes a plurality of hollow parts 212 extending along the thickness direction X (arrangement direction X), and partition walls (ribs) 214 that section between the plurality of hollow parts 212. By including the hollow parts 212, the elastic part 210 is easily deformed elastically in the arrangement direction X. Since the plurality of hollow parts 212 extend along the thickness direction X (arrangement direction X), the structure can be stably maintained and the decrease in elastic function can be suppressed relatively compared to a case where, for example, the plurality of hollow parts 212 extend perpendicular to the arrangement direction X. Additionally, even if the rectangular secondary battery 100 generates heat at the charging or discharging, for example, the heat insulation effect of the hollow parts 212 makes it difficult for the elastic part 210 to be influenced by the heat generation. Thus, the thermal deterioration of the elastic part 210 can be suppressed. Moreover, the spacer 200 can be thinned relatively and the volume energy density of the battery pack 500 can be improved, compared to the aspect as disclosed in, for example, Japanese Patent Application Publication No. 2017-107648. Thus, the effect of the art disclosed herein can be achieved at the high level.

The partition walls 214 form the frame of the elastic part 210. As illustrated in FIG. 6, the partition walls 214 are regularly provided on the surface (Y-Z plane) that is orthogonal to the thickness direction X (arrangement direction X). The partition walls 214 extend along the thickness direction X (arrangement direction X) (from a front side to a depth side in FIG. 6). The partition walls 214 section between the plurality of hollow parts 212.

The plurality of hollow parts 212 are sectioned by the partition walls 214, and are arranged regularly along the thickness direction X (arrangement direction X). The plurality of hollow parts 212 are independent from each other here. In these points, the hollow parts 212 are different from a porous material (sponge shape) with pores communicating in a three-dimensional mesh shape. Although not limited in particular, the size (volume) of one hollow part 212 may be 1 mm³ or more. The hollow part 212 has a hexagonal shape in the Y-Z plan view here. That is to say, the hollow part 212 has a hexagonal columnar shape along the thickness direction X. The hollow part 212 here has both end parts in the thickness direction X (arrangement direction X) open (opening). The hollow part 212 is a penetration hole here. The elastic part 210 has a penetration hole structure, specifically a polygonal columnar penetration hole structure (more specifically, hexagonal columnar penetration hole structure). In the present specification, the term "hole structure" refers to a general structure including the plurality of hollow parts 212 arranged regularly along the thickness direction X (arrangement direction X).

As illustrated in FIG. 6, the elastic part 210 has a honeycomb structure here. Thus, the hollow part 212 can be maintained easily even when the charging and discharging cycle is repeated, and the elastic function can be achieved stably in the long term easily. In the present specification, the term "honeycomb structure" refers to a structure included in "hole structure" and refers to the general three-dimensional space filling with stereoscopic figures arranged without a space therebetween, without being limited to the case in which the shape of the hollow part 212 is hexagonal in the Y-Z plan view.

As illustrated in FIG. 6, the ratio of the total area of the plurality of hollow parts 212 to the entire area of the elastic part 210 in the surface (Y-Z plane) that is orthogonal to the thickness direction X (arrangement direction X) is preferably 0.25 or more, and more preferably 0.35 to 0.8. When the ratio is a predetermined value or more, the expansion of the rectangular secondary battery 100 can be absorbed more easily and the rectangular secondary battery 100 can be pressed stably with a predetermined level or more of the restriction load. When the rectangular secondary battery 100 swells, the spacer 200 is crushed easily to absorb the swelling easily. When the ratio is a predetermined value or less, the hollow parts 212 can be maintained stably and the durability of the elastic part 210 can be improved.

The heat insulation part 220 is disposed between the elastic part 210 and the rectangular secondary battery 100 in the arrangement direction X. The heat insulation part 220 is a part with lower heat conductivity than the elastic part 210. In other words, the heat insulation part 220 is the part with a higher heat insulation property than the elastic part 210. Therefore, even if the rectangular secondary battery 100 generates heat at the charging and discharging, for example, the provision of the heat insulation part 220 makes it difficult for the elastic part 210 to be influenced by the heat generation by the heat insulation effect of the heat insulation part 220. Thus, the thermal deterioration of the elastic part 210 can be suppressed. Additionally, even if the temperature of the rectangular secondary battery 100 increases, the conduction of the heat to the adjacent rectangular secondary battery 100 can be suppressed. Therefore, a series of heat generation of the rectangular secondary batteries 100 can be suppressed and the entire battery pack 500 can be prevented from having excessively high temperature.

From such a viewpoint, the heat conductivity of the heat insulation part 220 is preferably 0.15 W/(m.K) or less and more preferably 0.1 W/(m.K) or less. It is more preferable that the heat insulation part 220 be disposed on each of both surfaces of the elastic part 210 in the arrangement direction X. Thus, the effect of the art disclosed herein can be achieved at the particularly high level. In the present specification, the heat conductivity is a value measured based on JIS A1412-1 (2016) of Japanese Industrial Standards.

The heat insulation part 220 may be a porous body. Thus, by incorporating air in the heat insulation part 220, a high heat insulation function can be achieved. The heat insulation part 220 preferably includes, for example, inorganic filler (for example, ceramics such as alumina) and a polymer material. The heat insulation part 220 is preferably formed using the inorganic filler as a main body (a component occupying the maximum mass among the constituent components is the main body and, for example, when the entire constituent components is 100 mass%, the component that occupies 50 mass% or more is the main body). The elastic modulus of the heat insulation part 220 is higher than that of the elastic part 210 here. However, the elastic modulus of the heat insulation part 220 may be lower than that of the elastic part 210 or may be the same as that of the elastic part 210.

In a preferred aspect, for example, when the spacer 200 is assembled to the battery pack 500 and compressed, a part of the elastic part 210 is disposed in the heat insulation part 220. In one example, the elastic part 210 includes one or a plurality of convex parts, the heat insulation part 220 has a concave part corresponding to such a convex part, and the convex part of the elastic part 210 is disposed in the concave part of the heat insulation part 220. More specifically, for example, a part of the partition wall 214 of the elastic part 210 (part near the heat insulation part 220) exists inside the heat insulation part 220. In another example, on the contrary, the heat insulation part 220 includes one or a plurality of convex parts, the elastic part 210 has a concave part corresponding to such a convex part, and the convex part of the heat insulation part 220 is disposed in the concave part of the elastic part 210. More specifically, for example, the convex part of the heat insulation part 220 is stuck in the hollow part 212 (penetration hole) of the elastic part 210. Thus, the integrity between the elastic part 210 and the heat insulation part 220 can be improved and the deviation in stacking can be prevented. In addition, as the elastic part 210 and the heat insulation part 220 overlap partially in the thickness direction X, the spacer 200 can be thinned and the volume energy density of the battery pack 500 can be improved.

The battery pack 500 is usable in various applications, especially when high-rate charging and discharging are repeated (heat easily occurs in the charging and discharging) and for example, can be suitably used as a motive power source for a motor (power source for driving) that is mounted in a vehicle such as a passenger car or a truck. The vehicle is not limited to a particular type, and may be, for example, a plug-in hybrid electric vehicle (PHEV), a hybrid electric vehicle (HEV), or a battery electric vehicle (BEV).

Although the preferable embodiments of the present disclosure have been described above, they are merely examples. The present disclosure can be implemented in various other modes. The present disclosure can be implemented based on the contents disclosed in the present specification and the technical common sense in the relevant field. The techniques described in the scope of claims include those in which the embodiments exemplified above are variously modified and changed. For example, a part of the aforementioned embodiment can be replaced by the following modification, and another modification can be added to the aforementioned embodiment. Additionally, the technical feature may be deleted as appropriate unless such a feature is described as an essential element.
(1) For example, in the aforementioned embodiment, the outer shape of each of the elastic part 210 and the heat insulation part 220 is a flat plate shape and the surface thereof (Y-Z plane) orthogonal to the thickness direction X (arrangement direction X) has approximately the same area. However, the present disclosure is not limited to this example. The elastic part 210 and the heat insulation part 220 may be different in area of the Y-Z plane. In a modification, the area of the Y-Z plane of the elastic part 210 is preferably less than or equal to the area of the Y-Z plane of the heat insulation part 220. When the area of the heat insulation part 220 is large, the influence from the heat generation of the rectangular secondary battery 100 can be reduced further and the thermal deterioration of the elastic part 210 can be suppressed at the high level.
(2) For example, in the aforementioned embodiment, the plurality of hollow parts 212 included in the elastic part 210 are independent from each other. However, the present disclosure is not limited to this example. The plurality of hollow parts 212 may communicate with each other through a hole part penetrating the partition wall 214. In other words, the elastic part 210 may have a hole part that communicates between the plurality of hollow parts 212. In such an aspect, the air can enter and exit the plurality of hollow parts 212 smoothly, making it possible to suppress the decrease in elastic function due to a so-called sucking effect.
(3) For example, in the aforementioned embodiment, the elastic part 210 has the honeycomb structure and the plurality of hollow parts 212 included in the elastic part 210 have the hexagonal shape in the Y-Z plan view. However, the present disclosure is not limited to this example. The hollow parts 212 do not need to have the honeycomb structure. The hollow parts 212 may be arranged randomly. The shape of the hollow part 212 in the Y-Z plan view may be other than the hexagonal shape, for example, a circular shape, a triangular shape, a quadrangular shape, or the like.

FIG. 7 is a diagram corresponding to FIG. 6, illustrating an elastic part 210a according to a first modification. As illustrated in FIG. 7, in the elastic part 210a, a plurality of hollow parts 212a have a circular shape. That is to say, the elastic part 210a has a circular penetration hole structure here. FIG. 8 is a diagram corresponding to FIG. 6, illustrating an elastic part 210b according to a second modification. As illustrated in FIG. 8, in the elastic part 210b, a plurality of hollow parts 212b have a quadrangular shape. That is to say, the elastic part 210b has a regular mesh shape (lattice shape) structure. However, the elastic part 210b may have a random mesh shape (lattice shape) structure.

(4) For example, in the aforementioned embodiment, the hollow part 212 of the elastic part 210 has both the end parts in the thickness direction X (arrangement direction X) open. The elastic part 210 has the polygonal columnar penetration hole structure (more specifically, hexagonal columnar penetration hole structure). However, the present disclosure is not limited to this example. In a modification, the hollow part 212 may have one end part or both end parts in the thickness direction X closed. The elastic part 210 may have a non-penetration hole structure. The hollow part 212 may be sectioned in the middle of the space in the thickness direction X (arrangement direction X).

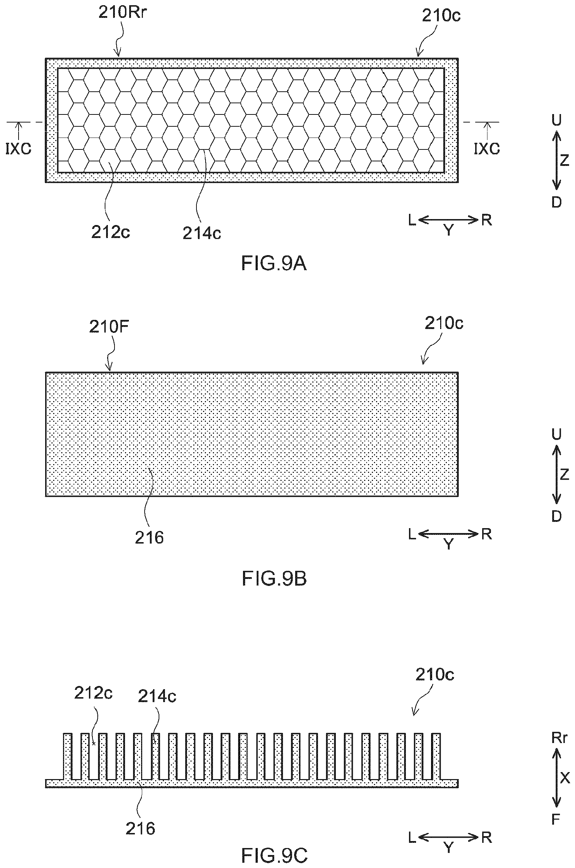

FIGS. 9A to 9C are schematic views of an elastic part 210c according to a third modification. FIG. 9A is a plan view of a rear surface 210Rr of the elastic part 210c (first Y-Z plane), FIG. 9B is a plan view of a front surface 210F of the elastic part 210c (second Y-Z plane), and FIG. 9C is a longitudinal cross-sectional view (in the thickness direction X) taken along line IXC-IXC in FIG. 9A. As illustrated in FIG. 9C, the elastic part 210c includes a plurality of hollow parts 212c extending along the thickness direction X (arrangement direction X), partition walls 214c that section between the plurality of hollow parts 212c, and additionally, a base part 216 with a flat plate shape that supports the partition walls 214c.

As illustrated in FIG. 9B and FIG. 9C, the base part 216 expands along the front surface 210F of the elastic part 210c. The base part 216 is a part that does not include the hollow part 212c here. The base part 216 is a non-porous (solid structure) part. The base part 216 may be provided on a surface of the rectangular secondary battery 100 on a side that faces the long side wall 12b, or provided on a surface on a side that faces the heat insulation part 220. The provision of the base part 216 makes it easier to align with the rectangular secondary battery 100 and can improve the productivity or workability of the battery pack 500. From such a viewpoint, the height (length in the up-down direction Z) and/or the width (length in the long side direction Y) of the base part 216 preferably coincides substantially with the height and/or the width of the long side wall 12b of the rectangular secondary battery 100.

The thickness of the base part 216 (length in the arrangement direction X) is preferably 0.1 mm or more, and more preferably 0.3 mm or more. The thickness of the base part 216 is preferably 5 mm or less, and more preferably 2 mm or less. The thickness of the base part 216 (length in the arrangement direction X) may not be uniform in the Y-Z plane and a thick or thin part may exist in a part. Moreover, the area of the Y-Z plane of the base part 216 may be more than or equal to the area of the Y-Z plane where the partition walls 214c exist. The partition walls 214c extend from the base part 216 along the thickness direction X (arrangement direction X).

The hollow part 212c here has a hexagonal columnar shape along the thickness direction X. One end part (front end part in FIG. 9C) of the hollow part 212c in the thickness direction X (arrangement direction X) is closed. Here, a surface of the hollow part 212c on the side that faces the heat insulation part 220 is closed by the base part 216. The elastic part 210c has a comb-like shape in a cross-sectional view in the thickness direction X. By closing one end part of the hollow part 212c in this manner, integration with the heat insulation part 220 becomes easy and the workability can be improved. On the other hand, as illustrated in FIG. 9A, the other end part (rear end part) of the hollow part 212c in the thickness direction X (arrangement direction X) is open. Here, the surface on the side that faces the long side wall 12b of the rectangular secondary battery 100 is open.

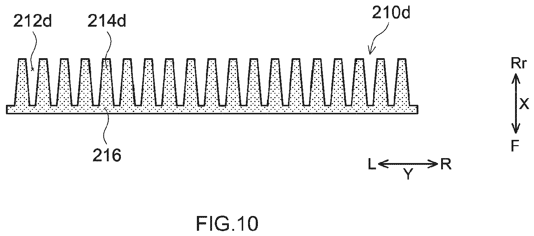

(5) Note that the hollow part 212 in the above embodiment and the hollow part 212c in the third modification have the hexagonal columnar shape along the thickness direction X. However, the present disclosure is not limited to this example. FIG. 10 is a diagram corresponding to FIG. 9C, illustrating an elastic part 210d according to a fourth modification. As illustrated in FIG. 10, the elastic part 210d includes a plurality of hollow parts 212d extending along the thickness direction X (arrangement direction X), partition walls 214d that section between the plurality of hollow parts 212d, and the base part 216 with a flat plate shape that supports the partition walls 214d. The hollow part 212d has a tapered shape along the thickness direction X (arrangement direction X). The partition wall 214d has a trapezoidal shape in the cross-sectional view in the thickness direction X. In such an aspect, the hollow parts 212d can be maintained easily even after the charging and discharging cycle is repeated, and the elastic function can be achieved stably in the long term. Moreover, the manufacturing cost can be reduced by increasing the yield of the elastic part 210d.

As described above, the following items are given as specific aspects of the art disclosed herein.
Item 1: The battery pack including: the plurality of rectangular secondary batteries that are disposed along the predetermined arrangement direction; and the spacer that is disposed between the rectangular secondary batteries that are adjacent in the arrangement direction, in which the spacer includes the elastic part including the plurality of hollow parts extending along the arrangement direction and configured to be elastically deformable in the arrangement direction, and the heat insulation part disposed between the elastic part and the rectangular secondary battery in the arrangement direction and having lower heat conductivity than the elastic part.
Item 2: The battery pack according to Item 1, in which the elastic part has the honeycomb structure.
Item 3: The battery pack according to Item 1 or 2, in which the ratio of the total area of the plurality of hollow parts to the entire area of the elastic part in the surface of the elastic part that is orthogonal to the arrangement direction is 0.35 or more and 0.8 or less.
Item 4: The battery pack according to any one of Items 1 to 3, in which the area of the surface of the elastic part that is orthogonal to the arrangement direction is less than or equal to the area of the surface of the heat insulation part that is orthogonal to the arrangement direction.
Item 5: The battery pack according to any one of Items 1 to 4, in which in the elastic part, one end part of the plurality of hollow parts in the arrangement direction is closed and the other end part thereof is open.
Item 6: The battery pack according to any one of Items 1 to 5, in which a part of the elastic part is disposed in the heat insulation part.
Item 7: The battery pack according to any one of Items 1 to 6, in which the elastic part and the heat insulation part are integrated by the binding member.
Item 8: The battery pack according to any one of Items 1 to 7, in which the spacer further includes the base part with a flat plate shape.
Item 9: The battery pack according to any one of Items 1 to 8, in which the elastic part includes the hole part that communicates between the plurality of hollow parts.
Item 10: The battery pack according to any one of Items 1 to 9, in which the hollow part has the tapered shape along the arrangement direction.

### [Reference Signs List]

10 Battery case
20 Electrode body
100 Rectangular secondary battery
200 Spacer
210, 210a, 210b, 210c, 210d Elastic part
212, 212a, 212b, 212c, 212d Hollow part
214, 214c, 214d Partition wall
216 Base part
220 Heat insulation part
300 Restriction mechanism
500 Battery pack

## Claims

1. A battery pack (500) comprising:
a plurality of rectangular secondary batteries (100) that are disposed along a predetermined arrangement direction (X); and
a spacer (200) that is disposed between the rectangular secondary batteries (100) that are adjacent in the arrangement direction (X), wherein the spacer (200) includes an elastic part (210) including a plurality of hollow parts (212) extending along the arrangement direction (X) and configured to be elastically deformable in the arrangement direction (X), and a heat insulation part (220) disposed between the elastic part (210) and the rectangular secondary battery (100) in the arrangement direction (X) and having lower heat conductivity than the elastic part (210).

2. The battery pack (500) according to claim 1, wherein the elastic part (210) has a honeycomb structure.

3. The battery pack (500) according to claim 1 or 2, wherein a ratio of a total area of the plurality of hollow parts (212) to an entire area of the elastic part (210) in a surface of the elastic part (210) that is orthogonal to the arrangement direction (X) is 0.35 or more and 0.8 or less.

4. The battery pack (500) according to any one of claims 1 to 3, wherein an area of the surface of the elastic part (210) that is orthogonal to the arrangement direction (X) is less than or equal to an area of a surface of the heat insulation part (220) that is orthogonal to the arrangement direction (X).

5. The battery pack (500) according to any one of claims 1 to 4, wherein in the elastic part (210), one end part of the plurality of hollow parts (212) in the arrangement direction (X) is closed and the other end part thereof is open.

6. The battery pack (500) according to any one of claims 1 to 5, wherein a part of the elastic part (210) is disposed in the heat insulation part (220).

7. The battery pack (500) according to any one of claims 1 to 6, wherein the elastic part (210) and the heat insulation part (220) are integrated by a binding member.

8. The battery pack (500) according to any one of claims 1 to 7, wherein the spacer (200) further includes a base part (216) with a flat plate shape.

9. The battery pack (500) according to any one of claims 1 to 8, wherein the elastic part (210) includes a hole part that communicates between the plurality of hollow parts (212).

10. The battery pack (500) according to any one of claims 1 to 9, wherein the hollow part (212) has a tapered shape along the arrangement direction (X).
